Europäisches Patentamt

European Patent Office

Office européen des brevets

(11) Publication number: 0 537 916 A2

# EUROPEAN PATENT APPLICATION

(21) Application number: 92308777.9

(22) Date of filing: 25.09.92

(51) Int. Cl.5: G11B 19/20

(30) Priority: 18.10.91 US 779212

(43) Date of publication of application:
21.04.93 Bulletin 93/16

(84) Designated Contracting States:
DE FR GB IT

(71) Applicant: SEAGATE TECHNOLOGY
INTERNATIONAL
c/o Maples & Calder P.O. Box 309
Georgetown Grand Cayman Island(KY)

(72) Inventor: Joseph, Eric David
709 Upper Navarra Drive
Scotts Valley, California 95066(US)
Inventor: Peppiette, Roger Charles
59 S. Branciforte Avenue
Santa Cruz, California 95062(US)

(74) Representative: Sturt, Clifford Mark et al
J. MILLER & CO. 34 Bedford Row Holborn
London WC1R 4JH (GB)

(54) A circuit for controlling an actuator arm in a disk drive system.

(57) The head assembly (20) of a disk drive device is retracted upon receipt of an enabling signal.

The control and parking circuit comprises a transistor (62) having its emitter coupled to the voltage supply (60), its collector coupled to the actuator motor voltage terminal ($V_m$) and its base coupled to the output of operational amplifier 80. The inputs for the amplifier 80 are derived from the other actuator motor terminal ($V_m$) and the collector of the transistor (62).

Thus, the park circuit current and voltage are monitored and adjusted so that head parking is accomplished at an approximate constant velocity.

FIG. 4

Rank Xerox (UK) Business Services
(3.10/3.5x/3.0.1)

The present invention relates to a circuit for controlling and in particular parking an actuator arm in a magnetic disk drive system upon receipt of an enabling signal.

Magnetic head disk drive systems have found widespread use as a cost effective and convenient form of data storage. In a magnetic disk drive system, a magnetic disk rotates at high speed while a magnetic read/write head "flies" over the surface of the rotating disk. The magnetic disk is rotated by means of a spindle drive motor. The magnetic head is suspended over the disk on a spring loaded support arm known as the actuator arm. As the magnetic disk rotates at its operating speed the moving air generated by the rotating disk, in conjunction with the physical design of the magnet head, allows the head to glide over the disk surface on a cushion of air. The flying height of the magnetic head over the disk surface is primarily a function of disk rotation, the aerodynamic properties of the magnetic head assembly and the force exerted by the spring-loaded actuator arm.

Information is stored on concentric tracks of the magnetic disks. The information is transferred to or read from the disk by means of the flying magnetic head. In order to minimise destruction or distortion of the stored data or magnetic recording surface on the disk, it is necessary that the flying head lands on tracks or portions of the disk not used for storing information when power is lost to the disk drive system. This parking of the head is generally accomplished by moving the actuator arm on which the head is located to the inner most portion of the magnetic disk, also known as the landing zone. Upon movement above the landing zone, the head may gently come to rest in contact with the magnetic disk and not cause damage to stored information on the disk surface. Head retract and parking techniques are well known and described in the prior art such as U.S. patent no. 4,679,102, incorporated herein by reference.

A well known technique employed for parking the magnetic head makes use of back EMF generated by the spindle motor as the source voltage for the actuator motor. For purposes of illustration an actuator motor known as a voice coil motor (VCM) will be referenced, although alternate actuator motors could also benefit from the present invention. The VCM is utilised to drive the actuator arm and the accompanying magnetic head to the landing zone. The head retraction technique of the prior art typically relies on a voltage regulation scheme such as the circuitry described and claimed in U.S. patent no 4,963,802.

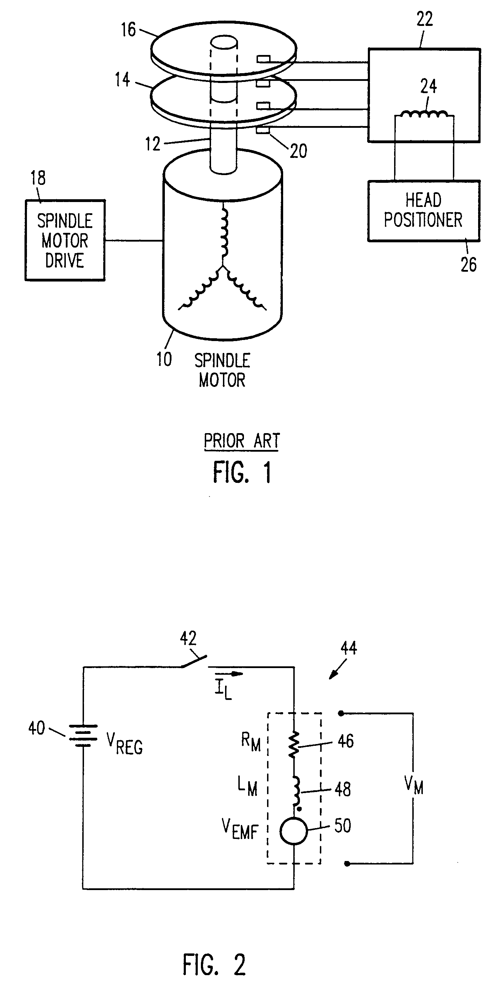

Referring now to Figure 1, a diagram of the basic elements comprising a disk drive machine is shown. The disk drive shown is comprised of a spindle motor 10, a plurality of hard disks 14 and 16, a spindle motor drive circuit 18, a plurality of heads 20, a head assembly 22, and a head positioning circuit 26. The spindle motor 10 preferably comprises a DC motor having a plurality of stator windings which are individually energised under the control of the spindle motor drive circuit 18. The energised motor windings induce a force for driving the spindle motor rotor. The spindle motor rotor typically is comprised of a DC magnet or pairs of DC magnets. The rotor is mechanically coupled to a drive shaft 12 to which disks 14 and 16 are secured. Disks 14 and 16 are of conventional construction known to those of ordinary skill in the art and the entire unit is housed in a sealed container (not shown) as typical for Winchester drive machines. The spindle motor drive circuit 18 may include or be controlled by an integrated circuit drive for energising the spindle motor windings in a predetermined sequence. The spindle motor drive circuit functions to drive the motor at a predetermined constant speed and preferably initiates a start-up operation whereby the disk rapidly and accurately attains the desired operating speed. It is appreciated that this speed is efficient, that the air flow generated by the rotation of disks 14 and 16 causes heads 20 to "fly" above the surface of the disk at an approximate height of $1.968 \times 10^{-3}$m (50 microinches) or less.

Motor drive circuitry is well known in the prior art and may consist or be comprised of elements as set forth in U.S. patent 4,922,169 incorporated herein by reference. Magnetic heads 20 are mechanically coupled to and supported by the head assembly 22. The head assembly may be of the rotary type which moves the head in an actuator fashion across the rotating disks 14 and 16 by use of a VCM. Two disks are provided each disk having two surfaces on which information may be written and read. Accordingly, four magnetic heads are needed, each head being associated with the respective disk surface for the purpose of writing or reading information on that surface. If desired, a separate surface of one disk may be dedicated as a servo surface having servo information recorded thereon. The particular one of heads 20 which cooperates with that surface may then function as a servo head which aids in the control of the head assembly 22 thereby positioning the heads at a desired track.

Figure 1, also shows a VCM 24 coupled to the head positioning circuit 26 for the selective energisation of VCM 24. The VCM 24 generally consists of a loop of wire containing numerous windings physically located between one or more permanent magnets. The wire loop of the voice coil contains electrical connections which enable the coil to carry a current thereby generating a magnetic field which interacts with the field of the permanent magnets on the poles. The force generated between the conflicting magnetic field of the current carrying voice coil and the mounted permanent magnets is proportional to the amount of electrical current in the coil and results in the head assembly rotating in a specific direction about its pivot axis. The direction of movement about the pivot axis is related to the polarity of the current flowing through the voice coil.

During normal operation motor drive circuit 18 drives spindle motor 10 to rotate disks 14 and 16 at the aforementioned constant predetermined speed. Magnetic heads 20 write data on and read data from the respective surfaces of the disk. Depending upon the location on which data is written or read, head position circuit 26 drives VCM 24 of head assembly 22 to move heads 20 radically such that the magnetic heads are positioned at a particular track at which information is to be written or read on a respective disk surface. When power is removed from the spindle motor a switch (not shown) is opened and the park circuitry is enabled such that the head assembly 22 is driven to retract heads 20 from the usable surfaces of disks 14 and 16.

Figure 2 is a schematic drawing of a constant voltage regulation head park circuit. A regulated voltage supply $V_{REG}$, 40, is coupled via a switch, 42, to actuator motor, 44. Motor 44 may be a VCM or other actuating device as utilised in a disk drive apparatus. Motor 44 may be modelled as resistor $R_M$, 46, inductor $L_M$, 48 and back EMF voltage $V_{EMF}$ 50. The back EMF voltage is generated by the magnetic components of the motor when in motion and is proportional to the motor velocity. The voltage across actuator motor 44 in steady state may be expressed mathematically by equation number one.

Equation # 1)    $V_M = I_L R_M + V_{EMF}$

Where,

$V_M$ =    the voltage across actuator motor 44
$I_L$ =    current through actuator motor 44
$R_M$ =    resistance of actuator motor 44
$V_{EMF}$ =    back EMF component of actuator motor 44

The circuit of Figure 2 regulates actuator motor voltage at a constant value and may be represented mathematically by the following equation:

Equation #2)    $V_{REG} = I_L R_M + V_{EMF}$

Where, $V_{REG}$ = the regulated voltage of the circuit.

A disadvantage of a constant voltage system is that the velocity of the actuator motor is dependent on the voltage drop due to the magnitude of $I_L R_M$. For example, actuator motor 44 moving with a particular velocity and having a particular back EMF, $V_{EMF}$, requires a particular steady state current, $I_{L1}$, to overcome friction, biasing forces and other impediments in order to run at this velocity. The value of $V_{EMF1}$ may be determined by equation three:

Equation #3)    $V_{REG} = I_{L1} R_M + V_{EMF1}$

The specific value of $V_{EMF1}$ depends on the mechanical equation of motion of the actuator motor relating $I_L$ and $V_{EMF}$ and including all the relevant friction terms for the particular system.

If the friction of the system changes, then $I_{L1}$ and $V_{EMF1}$ will no longer be solutions to the equation of motion of the motor. Therefore $I_L$ and $V_{EMF}$ will vary until a new equilibrium velocity is achieved which is a solution to both the equation of motion of the actuator motor and the regulated voltage equation:

Equation #4)    $V_{REG} = I_{L2} R_M + V_{EMF2}$

Thus the velocity of the actuator motor must vary to compensate for variations in the friction of the system. If the friction of the system is sufficiently large, such as might exist during the parking of disk drive heads on a mechanical ramp, the motor current may increase to such a level that $I_L R_M = V_{REG}$. $V_{REG}$ would necessarily go to zero in an attempt to satisfy equation number 2. This means that the available current would not be sufficient to overcome the friction of the system and maintain a non-zero motor velocity, causing the actuator to stop before it has come to the end of its intended mechanical travel.

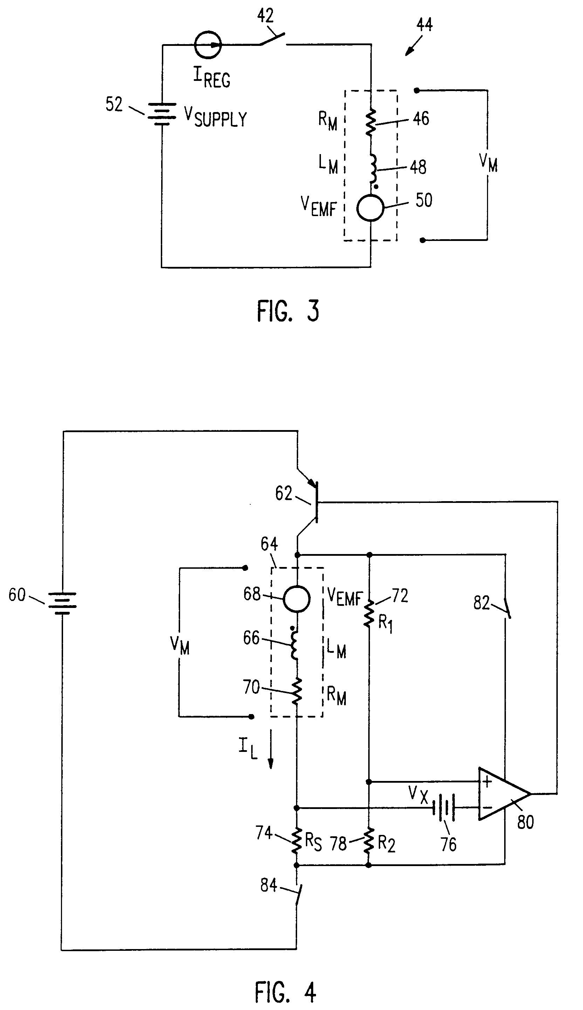

Figure 3 is a schematic drawing of a constant current regulation head park circuit. Current through actuator motor 44 is regulated at a constant value $I_{REG}$. This current, $I_{REG}$, is supplied by voltage supply $V_{SUPPLY}$ 52 and is coupled via switch 42 to actuator motor 44. The previous description of modelling actuator motor 44 is equally applicable to the circuit of Figure 3. The mathematical equation for the voltage across the actuator motor may now be stated as follows:

Equation #5)    $V_M = I_{REG} R_M + V_{EMF}$

A disadvantage of this system is that because the actuator motor current $I_L$ is fixed at a predetermined value, $I_{REG}$, the value of $V_{EMF}$ and hence the velocity of the motor is governed solely by the equation of motion of the motor relating $I_L$ and $V_{EMF}$ including all the relevant friction terms for the particular system. For example, a given motor with current $I_{REG}$ will have a particular steady state velocity and hence back EMF voltage $V_{EMF3}$ as determined by the equation of motion of the motor. The voltage across the motor $V_{M3}$ is then defined by these values:

Equation #6)    $V_{M3} = I_{REG}R_M + V_{EMF3}$

If the friction of the system changes, motor velocity will also change and hence $V_{EMF}$ will be a new value $V_{EMF4}$. $V_M$ will change accordingly an become $V_{M4}$.

Equation #7)    $V_{M4} = I_{REG}R_M + V_{EMF4}$

Thus, motor velocity must vary to compensate for variations in the friction of the system. If the friction of the system were sufficiently small, such as in the case of small form factor drives with one or two disks, then the velocity of the actuator motor, and hence $V_{EMF4}$ might increase to such a level that $V_M = V_{SUPPLY}$. Maximum velocity is then dependent on $V_{SUPPLY}$ and may be sufficiently large to cause damage to the heads when the actuator arm comes to rest at the end of its mechanical travel.

In accordance with the present invention, an apparatus and technique is provided for retracting the head assembly of a disk drive device upon receipt of an enabling signal. By controlling the voltage across the VCM, or other actuator motor mechanism, through circuitry that compensates for current induced voltage drop across the VCM and so substantially constant velocity movement of the actuator arm can be achieved.

It is an object of the present invention to provide an apparatus for retracting the head of a disk drive device.

According to the present invention there is provided a circuit for parking an actuator arm in a disk drive having a spindle motor including plural spindle motor windings, said spindle motor rotating at least one disk, a head assembly including at least one head co-operating with said disk, said head assembly having an actuator motor for positioning said head along said disk, said circuit retracts said head at an approximate constant velocity rate of movement and comprises:

a switch responsive to an enabling signal for connecting said actuator motor to said spindle motor windings or other voltage source to provide a voltage to said actuator motor; characterised by

means for monitoring current through said actuator motor in response to the applied voltage and adjusting the voltage applied to the actuator to substantially compensate current induced voltage drop across said actuator; and

means responsive to said monitoring means for controlling actuator motor back EMF and thereby velocity to a substantially constant predetermined value.

An advantage of the present invention is the parking of the magnetic head at a predetermined constant actuator arm velocity.

A feature of the present invention is utilisation of current and voltage monitoring apparatus to provide a known constant actuator arm velocity during parking.

Various other objects and features of the present invention will become readily apparent from the ensuing detailed description with reference to the accompanying drawings and the novel features will be particularly pointed out in the appended claims.

In the drawings, there is shown:
FIGURE 1 which is a block diagram of the basic elements comprising a drive device, as known in the prior art;
FIGURE 2 which is a schematic diagram illustrating a circuit implementing a voltage regulation parking scheme;
FIGURE 3 which is a schematic diagram illustrating a circuit implementing a current regulation parking scheme and
FIGURE 4 which is a diagram of one embodiment of the present invention.

An embodiment of the present invention will now be described with reference to figure 4 of which like items are referenced with the same numeral as figures 1 to 3.

Figure 4 is a partial block/partial schematic diagram of one embodiment of the present invention. Voltage supply 60 is coupled to the emitter of transistor 62. The collector of transistor 62 is coupled in common to a first terminal of actuator motor 64, resistor ($R_1$) 72 and switch 82. Actuator motor 64 is represented by an EMF component ($V_{EMF}$) 68, an inductor component ($L_M$) 66 and resistor component ($R_M$) 70. A second terminal of actuator motor 64 is coupled in common to a first terminal of voltage source ($V_x$) 76 and resistor ($R_s$) 74. A second terminal of resistor 72 is coupled in common to a first input of operational amplifier 80 and a first terminal of resistor ($R_2$) 78. Voltage source 76 is coupled to a second input of operational amplifier 80. Operational amplifier 80 has two supply inputs, one coupled to a second terminal of switch 82 and the other coupled in common to a second terminal to each of resistors 74 and 78 and in turn through switch 84 to voltage source 60. The output of operational amplifier 80 is coupled to the base of transistor 62. Switches 82 and 84 respond to an enabling signal controlled by circuitry (not shown).

A voltage source 60 is applied to the circuit. This source may be obtained by rectification of the back EMF voltages of a free spinning spindle motor or by other means.

The mathematical equation for the voltage across the actuator motor in steady state is given by equation one. For any particular value of $V_{EMF}$ there will be a required $I_L$ where these values are solutions to the equation of motion of the actuator motor. If the friction of the system changes, then $I_L$ must change in order to keep the value of $V_{EMF}$ constant and hence keep the speed constant.

Operational amplifier 80 operates in such a manner as to control the voltage across the actuator motor $V_M$ so that any such changes in $I_L$ and hence also the voltage $I_L R_M$ are compensated for by an equal change in $V_M$. Thus $V_{EMF}$ remains constant in the equation for the voltage across the actuator motor.

A detailed analysis of the function of the circuit of Figure 4 may begin by examining operational amplifier 80. The voltage at the first input of the operational amplifier may be represented by equation eight:

Equation #8) $\quad V^+ = [R_2/(R_1 + R_2)] [V_M + (I_L R_S)]$

Where,

$\quad V^+ = $ voltage at first input of operational amplifier,
$\quad R_1 = $ resistance value of resistor 72,
$\quad R_2 = $ resistance value of resistor 78,
$\quad R_S = $ resistance value of resistor 74,
$\quad I_L = $ current through the actuator motor.

Likewise, the voltage at the second input of the operational amplifier may be represented by equation nine:

Equation #9) $\quad V^- = I_L R_S + V_x$

Where,

$\quad V^- = $ voltage at second input of operational amplifier 80,
$\quad V_x = $ voltage source 76.

Operational amplifier 80 equalises the voltages at the first and second inputs, thereby yielding $V^- = V^+$. By replacing the derived values of $V^-$ and $V^+$ from equations eight and nine respectively the following relationship is obtained.

$$V_M^+ I_L R_S = [(R_1 + R_2)/R_2] I_L R_S + [(R_1 + R_2)/R_2] V_x$$

Substituting $V_M = I_L R_M + V_{EMF}$ in this equation gives:

$$I_L (R_M + R_S) + V_{EMF} = [(R_1 + R_2)/R_2] I_L R_S + [-(R_1 + R_2)/R_2] V_x$$

By choosing the values of $R_1$ and $R_2$ such that:

$$(R_1 + R_2)/R_2 = (R_M + R_S)/R_S$$

the equation reduces to:

Equation # 10) $\quad V_{EMF} = [(R_1 + R_2)/R_2] V_X$

Where $[(R_1 + R_2)/R_2] V_X$ is a constant value and is the redefined value to which $V_{EMF}$ is controlled, independent of the current required to overcome friction. Thus by utilising the implementation taught by the present invention, the current induced voltage drop across the actuator motor is compensated thereby providing constant velocity of the actuator arm during parking.

The teachings of the present invention overcome problems associated with previously described parking schemes because current $I_L$ varies in response to friction changes in the head park system while $V_M$ is controlled to compensate for variations in $I_L R_M$.

It is to be appreciated by a person skilled in the art that the above mentioned embodiment is described as an example and modifications may be made without departing from the scope of the present invention as defined in the appended claims.

## Claims

1. A circuit for parking an actuator arm in a disk drive having a spindle motor (10) including plural spindle motor windings, said spindle motor rotating at least one disk (14, 16), a head assembly (20 - 26) including at least one head (20) co-operating with said disk, said head assembly having an actuator motor (24) for positioning said head along said disk, said circuit retracts said head at an approximate constant velocity rate of movement and comprises:

a switch (82, 84) responsive to an enabling signal for connecting said actuator motor to said spindle motor windings or other voltage source to provide a voltage to said actuator motor; characterised by

means (62, 72, 74, 76, 78) for monitoring current through said actuator motor in response to the applied voltage and adjusting the voltage applied to the actuator to substantially compensate current induced voltage drop across said actuator; and

means (80) responsive to said monitoring means for controlling actuator motor back EMF and thereby velocity to a substantially constant predetermined value.

2. A circuit as claimed in claim 1, wherein the actuator motor means (24) is a voice coil motor.

3. A circuit as claimed in claim 1 or 2 wherein the means for monitoring current comprises a plurality of proportionally matched resistors (72, 74, 78), and a voltage source (76).

4. A circuit as claimed in any one of claims 1 to 3, where the means responsive to said current monitoring means comprises an operational amplifier (80).

5. A disk drive having a circuit for parking an actuator arm as claim in any one of claims 1 to 4.

PRIOR ART
FIG. 1

FIG. 2

FIG. 3

FIG. 4